# EUROPEAN PATENT SPECIFICATION

(11) **EP 1 703 828 B1**
(45) Date of publication and mention of the grant of the patent: **02.01.2008**
(21) Application number: 04743178.8
(22) Date of filing: 01.07.2004
(51) Int. Cl.: A47J 37/12

(54) **IMPROVEMENTS IN DEEP FAT FRYERS**
VERBESSERUNGEN BEI FRITEUSEN
FRITEUSES PERFECTIONNEES

(30) Priority: 30.12.2003 GB 0330121
(43) Date of publication of application: 27.09.2006
(73) Proprietor: Aga Foodservice Equipment Limited, Solihull West Midlands B90 4LH (GB)
(72) Inventor: GOW, John, Karron, Falkirk FK2 8JB (GB)
(74) Representative: Tranter, Andrew David
(86) International application number: PCT/GB2004/002831
(87) International publication number: WO 2005/063098

(56) References cited:
- GB-A- 436 972
- GB-A- 464 228
- GB-A- 807 354
- US-A- 5 706 717
- US-A- 5 975 071
- US-B1- 6 235 210
- US-B1- 6 305 270

## Description

This invention relates to deep fat fryers. While the expression "deep fat fryer" is commonly used, it will be appreciated that such fryers commonly use a vegetable oil as the cooking medium.

The invention has particular reference to commercial or professional deep fat fryers. Such fryers are of course very well known, and those currently available may be categorised as being of one of two types.

In a first type, the heat source is internal of the cooking pan and is constituted by electrical resistance heating tubes immersed in the cooking medium. Such tubes run horizontally along the pan which usually has a V-section base, often with a rather small dihedral angle, to provide a sedimentation zone for the collection of small food particles so that they may readily be removed by filtration. Cooking baskets used with deep fat fryers are conventionally flat-bottomed for ease of handling and to promote uniform cooking of the food charge. It will be clear that such a conventional flat-bottomed cooking basket cannot be lowered below the heating tubes, and in a typical arrangement between 30% and 40% of the cooking medium charge of the pan is located at or below the level of the heating tubes in the sedimentation zone.

In a second type of deep fat fryer, the pan is heated externally, typically by gas burners. Such fryers also have a V-section base which serves as a heating and sedimentation zone below the cooking zone, and such fryers are typically designed with a large dihedral angle to provide an extensive wall area for heating. A large proportion of the volume of the cooking medium is contained within this sedimentation zone, often as much as 30%. Again, a conventional flat-bottomed cooking basket cannot be lowered into this sedimentation zone.

We have found that current deep fat fryer pans are inefficient having regard not only to the consumption of cooking medium, but also thermally, thus contributing to high running costs, and it is an object of this invention to alleviate this problem.

We are aware of the teaching of GB 436 972 in which a flat bottom pan is provided with a flue wrap to improve its efficiency.

According to this invention, there is provided a deep fat fryer comprising a cooking pan and a burner constituting a heat source for heating a cooking medium within the pan, in which such pan has a substantially flat base which is located over said burner and in that the pan is provided with a flue wrap adapted to receive gaseous combustion products from the burner, and characterised in that the burner comprises a plenum chamber surmounted by a surface combustion plaque beneath a combustion chamber whose upper surface is, or is in thermal contact with, the base of the cooking pan.

We have found that mounting a flat-bottomed cooking pan over an external heat source enables a much greater proportion of the volume of the charge of cooking medium to be occupied by a cooking basket. This enables the use of a relatively low volume of cooking medium in relation to the food capacity of the pan and so promotes greater efficiency in the consumption of the cooking medium.

Furthermore, by arranging the cooking pan above the heat source, it is rather easy to achieve a very efficient heat transfer. Thermal efficiency is further promoted by the use of the flue wrap which is adapted to receive flue gases from the burner. The use of such flue wrap allows heat which would otherwise be lost to be transferred from the flue gases to the cooking pan.

The adoption of the invention promotes relatively low running costs in terms of the consumption of both cooking medium and fuel.

The flue wrap and the cooking pan are suitably made from a metal such as a stainless steel, and the flue wrap may be welded to the cooking pan, and it suitably rises up the side(s) of the pan substantially to a designed fill level of the cooking medium.

The flue wrap should be in thermal contact with at least one side of the cooking pan. In a preferred arrangement, such a flue wrap extends around three sides of a rectangular cooking pan for symmetrical communication with an outlet flue. It may be convenient to locate such outlet flue at the rear of the apparatus.

The heat source could be an oil burner, but is most preferably a gas burner.

In the embodiments of the invention, the burner comprises a plenum chamber surmounted by a surface combustion plaque beneath a combustion chamber whose upper surface is, or is in thermal contact with, the base of the cooking pan. This promotes excellent heat transfer and high fuel efficiency. The combustion chamber may also be welded to the cooking pan.

A gas supply for the burner preferably includes means for supplying the burner with premixed gas and air. Such gas/air mixture is suitably substantially stoichiometric and may be ignited by spark electrodes projecting into the combustion chamber.

In order to provide a sedimentation zone in the cooking pan and to assist draining of that sediment, or of the whole of the cooking medium when it is desired to replace it, it is preferred that the cooking pan should be installed and operated in a position such that its base is inclined to the horizontal. This inclination does not need to be large: 2° to 5° is quite sufficient. If the base of the cooking pan is inclined, it may be inclined downwardly to one side or the other, to the rear or to the front. It is preferably inclined downwardly to the front. This allows drained material to be collected at the front of the apparatus which is generally more convenient for the user.

The burner may be correspondingly inclined or the combustion chamber may be tapered (wedge-shaped) to accommodate this inclination.

A lower portion of the cooking pan may be provided with ribs, preferably external and preferably integral with the cooking pan. If provided on the base of the cooking pan, such ribs can act to stiffen that base and so militate against buckling due to thermal stresses. If provided externally of the pan, such ribs will not obstruct efficient cleaning of the pan, and they will also serve to increase the surface area of the exterior of the pan thus promoting heat transfer to the pan from the combustion chamber and/or the flue wrap.

The base of the cooking pan is suitably provided with an outlet for the cooking medium (in such sedimentation zone if present). It is convenient to provide such cooking medium outlet with a control valve.

A deep fat fryer according to the invention preferably includes means for recirculating the cooking medium. Such means for recirculating the cooking medium preferably comprises a reservoir feedable from said cooking medium outlet, and a pump feeding a line for returning cooking medium to the pan. It is suitable to provide a hollow wand for returning cooking medium to the pan at its rear. The wand may be arranged to terminate in a downwardly directed orifice which opens into the pan to minimise splashing. The recirculating means most preferably includes a filter which may be incorporated in a filtration pump.

A filter may be incorporated between the cooking medium outlet and such a reservoir. This allows the removal of food fragments from the cooking medium before that medium reaches the reservoir. It is convenient to locate such valve and filter at the front of the apparatus for ease in valve switching and filter replacement during routine maintenance of the apparatus.

If the pump operates to draw cooking medium from a reservoir, that reservoir can act as a buffer, helping to reduce any risk that the pump might overheat.

Apparatus according to the invention preferably includes control means including an on/off switch and an operator controllable temperature selector switch. These switches may be combined if desired, and it is suitable to be able to select a cooking medium temperature.

A thermostatic control is preferably provided which could suitably be graduated in steps of 10 ° C, from 130 ° C to 190°C.

Further control and/or monitoring means are preferably provided as follows:
means for controlling the gas ignition means;
means for monitoring combustion conditions;
means for controlling the supply of gas and air to the burner and for shutting down the supply of combustible gas in the absence of proper combustion conditions.
display means connected to appropriate monitors for indicating: when the cooking medium has reached a pre-set temperature; possible overheating of the cooking medium; possible failure or misconnection of any thermostat in the system, possible ignition failure; possible failure of the cooking medium to heat up at a predicted rate.

Further control features might include means for inputting time and temperature parameters, means, e.g. digital means, for displaying such parameters, means for giving an audible and/or visual indication of the expiry of any cooking time set, and means for storing the inputted parameters for repeated use.

A further level of control may be provided by allowing for "one touch" inputting of parameters appropriate for a particular foodstuff which is to be cooked by the operator. Thus, a fryer in accordance with the invention may incorporate memory means adapted to retain parameters appropriate for the cooking of a particular foodstuff and a "one touch" control operable to actuate and operate the fryer in accordance with those parameters.

In some preferred embodiments of the invention, the fryer of the invention incorporates a basket lift. Such a basket lift is suitably controllable so as to lower the basket into the cooking medium under the control of an operator, or, optionally, when the cooking medium reaches a desired temperature, and automatically to raise the basket on the expiry of a pre-set cooking time.

In some preferred embodiments of the invention, there are further provided means for monitoring the rate of temperature change in the cooking medium during cooking of a food load, which will be at least in part dependent on the weight of a food load, and for automatically adjusting the cooking parameters for a particular foodstuff in response thereto. Thus it will be possible, for example, to adjust the cooking time in relation the weight of the load.

Thus for example, for deep frying potato chips (French fries), a fully automatic apparatus could be arranged to operate on a "one touch" basis so that after charging of the basket with a load of chips, and pressing a "Chips" button, heating would be controlled to adjust the temperature of the cooking medium to, say, 130°C when the basket lift would automatically lower the food into the pan for a time dependent on the automatically weighed charge of food. Without further intervention, the lift would raise partially cooked chips from the pan and the temperature of the cooking medium would be increased, for example to 190°C whereupon the chips would again be lowered into the cooking medium for a second period of time, again dependent on the previously monitored weight. The cooked chips would then be lifted from the fryer ready for draining and serving.

A preferred embodiment of the invention will now be described with reference to the accompanying diagrammatic drawings in which:
**Figure 1** is a front elevation of a deep fat fryer omitting oil recirculating means;
**Figure 2** is a side elevation of the fryer of Figure 1 showing oil recirculating means;
**Figure 3** is a side elevation of a basket lift suitable for the fryer of **Figure 1,** and
**Figure 4** is a view of a control panel for the fryer.

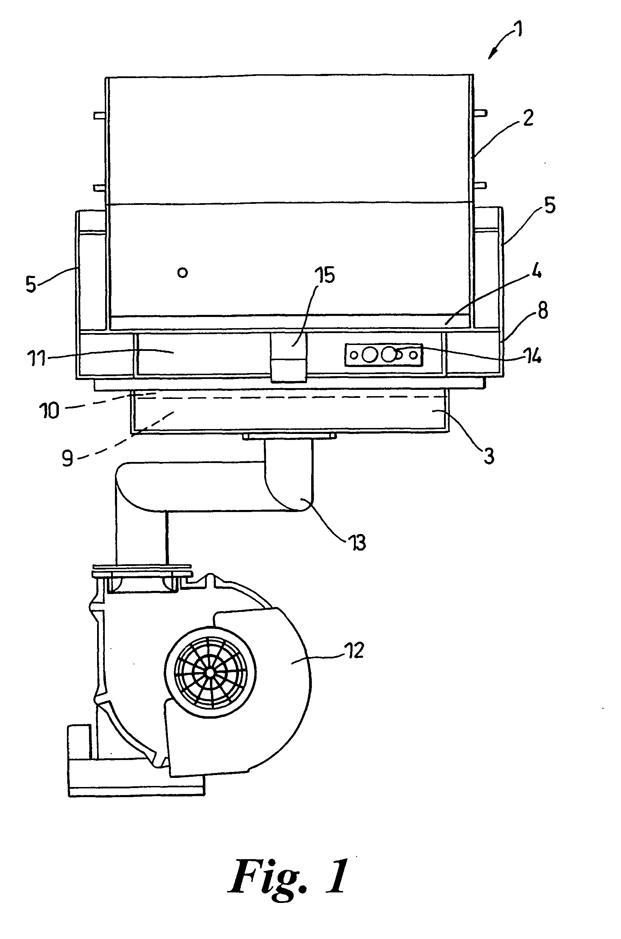

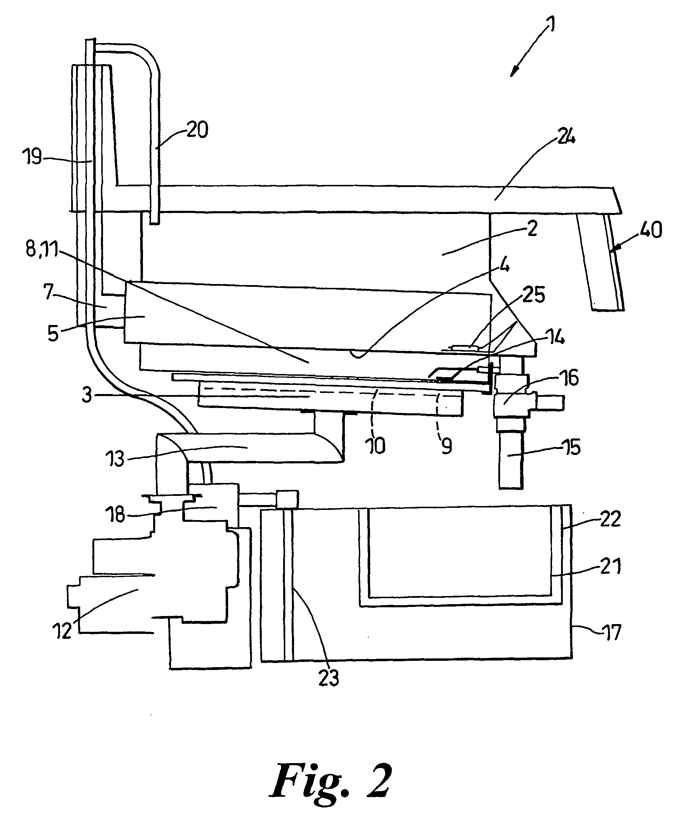

As shown in Figures 1 and 2, a deep fat fryer generally indicated at 1 comprises a rectangular cooking pan 2 and a gas burner 3 constituting a heat source for heating a cooking medium (not shown) within the pan 2. The fryer is characterised in that the pan 2 has a substantially flat base 4 which is located over the burner 3 and in that the pan is provided externally with a flue wrap 5 adapted to receive gaseous combustion products from the burner.

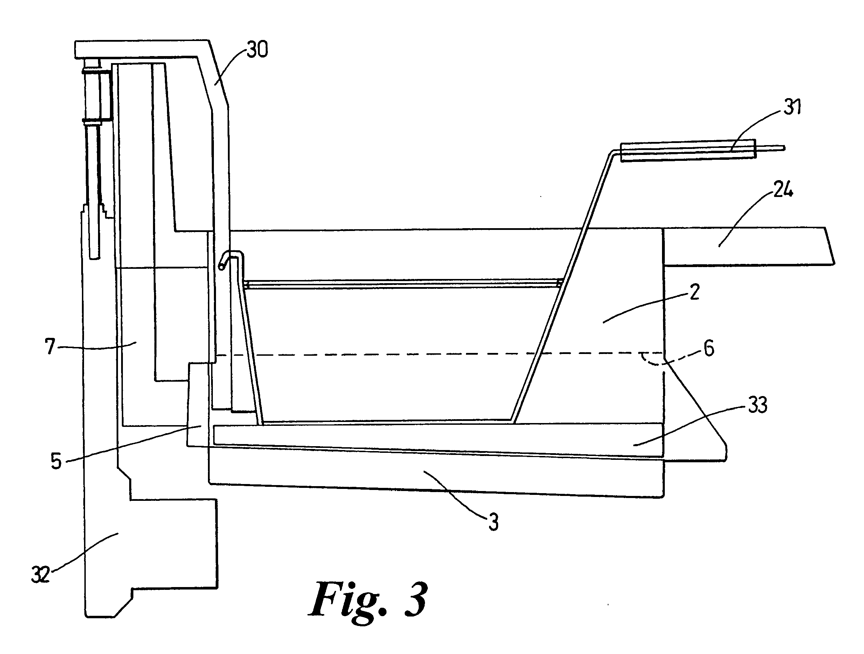

The flue wrap 5 and the cooking pan 2 are suitably made from a metal such as a stainless steel, and the flue wrap 5 may be welded to the cooking pan, and it rises up the side(s) of the pan to a designed fill level 6 (Fig. 3) of the cooking medium.

The flue wrap 5 extends around three sides of the cooking pan 2 for symmetrical communication with an outlet flue 7 at the rear of the apparatus.

The gas burner 3 comprises a plenum chamber 9 surmounted by a surface combustion plaque 10 beneath a combustion chamber 11 whose upper surface is, or is in thermal contact with, the base 4 of the cooking pan 2. This promotes excellent heat transfer and high fuel efficiency. The combustion chamber 11 is also welded to the cooking pan. The combustion chamber 11 communicates with the flue wrap 5 via side ducts 8.

A gas supply for the burner 3 includes a fan 12 for mixing air into a supply of fuel gas (not shown) and a duct 13 for supplying the resulting premixed gas and air to the burner. Such gas/air mixture is suitably substantially stoichiometric and may be ignited by spark electrodes 14 projecting into the combustion chamber 11.

In order to provide a sedimentation zone in the cooking pan and to assist draining of that sediment, or of the whole of the cooking medium when it is desired to replace it, the cooking pan 2 is installed and operated in a position such that its base 4 is inclined to the horizontal. This inclination does not need to be large: 2° is quite sufficient. The base 4 of the cooking pan is inclined downwardly to the front. This allows drained material to be collected at the front of the apparatus which is generally more convenient for the user.

The burner may be correspondingly inclined as shown, or the combustion chamber may be tapered (wedge-shaped) to accommodate this inclination.

The base 4 of the cooking pan 2 is provided with optional external stiffening ribs (not shown). Such ribs act to stiffen that base and so militate against buckling due to thermal stresses. As they are provided externally of the pan, such ribs will not obstruct efficient cleaning of the pan interior, and they will also serve to increase the surface area of the exterior of the pan thus promoting heat transfer to the pan from the combustion chamber. Such ribs may also be provided over the area of the flue wrap 5.

The base 4 of the cooking pan 2 is provided with a gravity fed outlet 15 for draining the cooking medium and any sediment present. The cooking medium outlet 15 has a control valve 16.

A filter is incorporated between the cooking medium outlet 15 and a reservoir 17. This allows the removal of food fragments from the cooking medium before that medium reaches the reservoir. It is convenient to locate such filter so that it is accessible from the front of the apparatus for ease in filter cleaning or replacement during routine maintenance of the apparatus. As shown, the filter comprises an inner basket filter 21 and a mesh filter 22.

The illustrated embodiment of deep fat fryer according to the invention includes means for recirculating the cooking medium. This includes the reservoir 17 arranged beneath the outlet 15 so that it can be fed with the cooking medium under gravity, and under control of the valve 16. A pump 18 feeds a line 19 for returning cooking medium to the pan 2 via a downwardly directed hollow wand 20 at the rear of the pan. The wand may be arranged to terminate beneath the designed liquid level in the pan if desired. The pump 18 may be a filtration pump incorporating a filter. The pump 18 operates to draw cooking medium from the reservoir 17 via an oil suction line 23.

The cooking pan is surrounded and surmounted by a hob 24, and it may be enclosed in a cabinet (not shown). The cabinet may be provided with wheels at its rear and legs at its front to allow for easy manoeuvrability for installation and maintenance while affording stability during use. The cabinet may have a door at the front for ready access to the filters 21, 22.

A thermocouple 25 is located in the bottom of the cooking pan 2.

Figure 3 illustrates an optional basket lift for raising or lowering a cooking basket 30 from or into the cooking pan 2. The lift incorporates a motor 32 and a basket support 33. The lift system may incorporate means for shaking the basket when it has been raised out of the cooking medium.

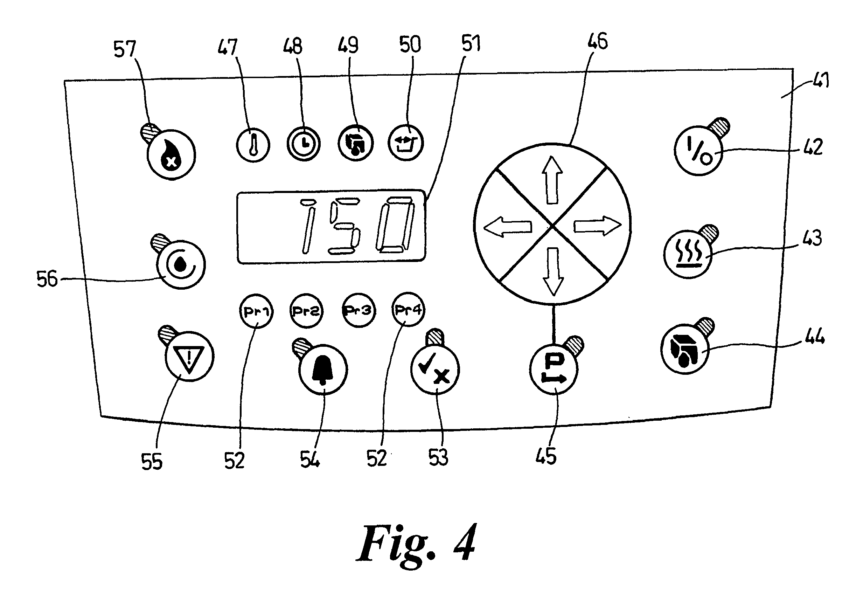

Apparatus according to the invention preferably includes control means 40 (Figure 2) including a microprocessor and a control panel 41 (Figure 4). including an on/off switch 42 and an operator controllable temperature selector.

Referring now to Figure 4, the control panel 41 includes a power switch 42 which incorporates a power-on indicator light. A combined temperature mode selection switch and burner active indicator is shown at 43: it is envisaged that the indicator should remain lit until a selected desired temperature is reached. A fat melt button 44 is provided for use when a fat rather than an oil is to be used as the cooking medium. Such indicator could be arranged to flash until the fat melt temperature has been reached and then to remain illuminated.

A program button and indicator 45 is provided for selecting a program function and for confirming values of cooking parameters entered using a set of navigation keys 46 which may also be used to scroll through settings and to select cooking parameters for pre-setting automatic cooking programs.

Selectable illuminated symbols represent temperature (47), time (48), fat melt (49) and basket shake (50) which can be selected so that their values may be changed using the navigation keys 46, while being displayed in LED display 51 which is also arranged to be able to display fault codes indicative of a possible malfunction of the apparatus, and the program selected.

A set of program mode buttons 52 is provided for selecting one of up to four cooking programs which may be preset by the operator to allow for "one touch" setting of one of four pre-set cooking programs to be used on that particular apparatus.

A multi-function indicator switch 53 is provided for executing any of the following functions:
a pre-selected program-press once to start, press again to halt program
a timer
a basket lift-press once to lower and a second time to raise, for example before a pre-set time has elapsed.

The indicator is suitably arranged to light up when the feature is selected and to go off when the cycle finishes or is manually stopped.

The control means may incorporate an audible timer alarm or other alarm which can be cancelled by an alarm cancel indicator switch 54.

A fault indicator 55 is provided. An error code for the particular fault encountered may be shown in the display 51. A further indicator 56 is provided for indicating that the filtration pump is active. The indicator 56 may be constituted as a pump switch. A burner lockout indicator 57 is also provided.

Temperature control is suitably graduated in steps of 10°C, e.g. from 130°C to 190°C. This maximum temperature may be increased to the extent that local health and safety regulations permit.

In some preferred embodiments of the invention, the thermocouple 25 is used to monitor the rate of temperature change in the cooking medium during cooking of a food load, which will be at least in part dependent on the weight of a food load, and the control microprocessor is arranged automatically to adjust the cooking parameters for a particular foodstuff in response thereto. Thus it will be possible, for example, to control the fuel supply to the burner, and/to adjust the cooking time in relation the weight of the load.

## Claims

1. A deep fat fryer (1) comprising a cooking pan (2) and a burner (3) constituting a heat source for heating a cooking medium within the pan (2), in which such pan (2) has a substantially flat base (4) which is located over said burner (3) and in that the pan (2) is provided with a flue wrap (5) adapted to receive gaseous combustion products from the burner (3), and **characterised in that** the burner (3) comprises a plenum chamber (9) surmounted by a surface combustion plaque (10) beneath a combustion chamber (11) whose upper surface is, or is in thermal contact with, the base (4) of the cooking pan (2).

2. A deep fat fryer according to Claim 1, wherein the flue wrap (5) is welded to the cooking pan (2),

3. A deep fat fryer according to Claim 1 or Claim 2, wherein the flue wrap (5) rises up the side(s) of the pan (2) to a designed fill level for the cooking medium.

4. A deep fat fryer according to any preceding claim, wherein the cooking pan (2) is rectangular and the flue wrap (5) extends externally around three sides of such cooking pan (2) for symmetrical communication with an outlet flue at the rear of the apparatus.

5. A deep fat fryer according to any preceding claim, wherein the burner (3) is a gas burner.

6. A deep fat fryer according to Claim 5, wherein the combustion chamber (11) is welded to the cooking pan (2).

7. A deep fat fryer according to any preceding claim, wherein a gas supply for the burner (3) includes means for supplying the burner with premixed gas and air.

8. A deep fat fryer according to Claim 5, 6 or 7, wherein spark electrodes project into the combustion chamber for igniting such gas/air mixture.

9. A deep fat fryer according to any preceding claim, wherein the cooking pan (2) is installed and operated in a position such that its base is inclined to the horizontal.

10. A deep fat fryer according to Claim 9, wherein the base (4) of the cooking pan (2) is inclined downwardly to the front.

11. A deep fat fryer according to any preceding claim, wherein a lower portion of the cooking pan (2) is provided with external ribs.

12. A deep fat fryer according to any preceding claim, wherein the base (4) of the cooking pan (2) is provided with an outlet (15) for the cooking medium.

13. A deep fat fryer according to Claim 12, wherein such cooking medium outlet (15) is provided with a control valve.

14. A deep fat fryer according to Claim 12 or Claim 13, and including means for recirculating the cooking medium.

15. A deep fat fryer according to Claim 14, wherein such means for recirculating the cooking medium comprises a reservoir (17) feedable from said cooking medium outlet (15), and a pump (18) feeding a line (19) for returning cooking medium to the pan.

16. A deep fat fryer according to Claim 15, wherein such return line (19) includes a hollow wand for returning cooking medium to the pan at its rear.

17. A deep fat fryer according to any of Claims 14 to 16, wherein the recirculating means includes a filter (21).

18. A deep fat fryer according to Claim 17, wherein such filter (21) is incorporated in a filtration pump.

19. A deep fat fryer according to Claim 17 or 18, wherein the recirculating means includes a filter incorporated between the cooking medium outlet and a reservoir (17).

20. A deep fat fryer according to Claim 19, wherein such cooking medium outlet (15) and filter (21) are located at the front of the apparatus.

21. A deep fat fryer according to any preceding claim which includes control means including an on/off switch (42) and an operator controllable temperature selector switch.

22. A deep fat fryer according to Claim 21, wherein a thermostatic control is provided for controlling the temperature of the cooking medium.

23. A deep fat fryer according to Claim 21 or Claim 22, and including means for controlling the gas ignition means.

24. A deep fat fryer according to any of Claims 21 to 23, and including means for monitoring combustion conditions.

25. A deep fat fryer according to any of Claims 21 to 24, and including means for controlling the supply of gas and air to the burner and for shutting down the supply of combustible gas in the absence of proper combustion conditions.

26. A deep fat fryer according to any of Claims 21 to 25, and including display means connected to appropriate monitors for indicating any one or more of the following:
when the cooking medium has reached a pre-set temperature;
possible overheating of the cooking medium;
possible failure or misconnection of any thermostat in the system;
possible ignition failure;
possible failure of the cooking medium to heat up at a predicted rate.

27. A deep fat fryer according to any of Claims 21 to 26, and including any one or more of:
means for inputting time and temperature parameters;
means for displaying such parameters;
means for giving an audible and/or visual indication of the expiry of any cooking time set;
means for storing the inputted parameters for repeated use.

28. A deep fat fryer according to any of Claims 21 to 27, and including memory means adapted to retain parameters appropriate for the cooking of a particular foodstuff and a "one touch" control operable to actuate and operate the fryer in accordance with those parameters.

29. A deep fat fryer according to any preceding Claim, and including a basket lift (32, 33).

30. A deep fat fryer according to Claim 29, wherein such a basket lift (32, 33) is controllable so as to lower the basket (30) into the cooking medium under the control of an operator or when the cooking medium reaches a desired temperature, and automatically to raise the basket on the expiry of a pre-set cooking time.

31. A deep fat fryer according to any of Claims 21 to 30, and including means for monitoring the rate of temperature change in the cooking medium during cooking of a food load and for automatically adjusting the cooking parameters for a particular foodstuff in response thereto.

## Patentansprüche

1. Friteuse (1), die einen Kochtopf (2) und einen Brenner (3) umfasst, der eine Wärmequelle zum Erwärmen eines Kochmediums in dem Topf (2) bildet, in dem der Topf (2) einen im Wesentlichen flachen Boden (4) hat, der über dem Brenner (3) angeordnet ist, und wobei der Topf (2) mit einer Abzugshülle (5) versehen ist, die angepasst ist, um gasförmige Verbrennungsprodukte von dem Brenner (3) aufzunehmen, und **dadurch gekennzeichnet, dass** der Brenner (3) eine Druckkammer (9) umfasst, die durch eine Oberflächenbrennplatte (10) überragt wird unter einer Brennkammer (11), deren obere Oberfläche der Boden (4) des Kochtopfs (2) ist, oder mit diesem in thermischem Kontakt ist.

2. Friteuse nach Anspruch 1, **dadurch gekennzeichnet, dass** die Abzugshülle (5) an den Kochtopf (2) geschweißt ist.

3. Friteuse nach Anspruch 1 oder Anspruch 2, **dadurch gekennzeichnet, dass** die Abzugshülle (5) sich an der Seite oder den Seiten des Topfs (2) hinauf bis zu einem vorgesehenen Füllstand für das Kochmedium erstreckt.

4. Friteuse nach einem der vorangehenden Ansprüche, **dadurch gekennzeichnet, dass** der Kochtopf rechteckig ist und die Abzugshülle (5) sich zur symmetrischen Kommunikation mit einem Auslassabzug am hinteren Teil der Vorrichtung außen um drei Seiten des Kochtopfs (2) erstreckt.

5. Friteuse nach einem der vorangehenden Ansprüche, **dadurch gekennzeichnet, dass** der Brenner (3) ein Gasbrenner ist.

6. Friteuse nach Anspruch 5, **dadurch gekennzeichnet, dass** die Brennkammer (11) am Kochtopf (2) angeschweißt ist.

7. Friteuse nach einem der vorangehenden Ansprüche, **dadurch gekennzeichnet, dass** eine Gasversorgung für den Brenner (3) Mittel zum Versorgen des Brenners mit einem Vorgemisch aus Gas und Luft umfasst.

8. Friteuse nach Anspruch 5, 6 oder 7, **dadurch gekennzeichnet, dass** Zündelektroden zum Zünden dieses Gas-/Luftgemischs in die Brennkammer ragen.

9. Friteuse nach einem der vorangehenden Ansprüche, **dadurch gekennzeichnet, dass** der Kochtopf (2) in einer Stellung angebracht und betrieben wird, dass sein Boden zur Waagerechten geneigt ist.

10. Friteuse nach Anspruch 9, **dadurch gekennzeichnet, dass** der Boden (4) des Kochtopfs (2) zur Vorderseite nach unten geneigt ist.

11. Friteuse nach einem der vorangehenden Ansprüche, **dadurch gekennzeichnet, dass** ein unterer Teil des Kochtopfs (2) mit äußeren Lamellen versehen ist.

12. Friteuse nach einem der vorangehenden Ansprüche, **dadurch gekennzeichnet, dass** der Boden (4) des Kochtopfs (2) mit einem Auslass (15) für das Kochmedium versehen ist.

13. Friteuse nach Anspruch 12, **dadurch gekennzeichnet, dass** der Auslass (15) für das Kochmedium mit einem Regelventil versehen ist.

14. Friteuse nach Anspruch 12 oder Anspruch 13, umfassend Mittel zum wieder in Umlauf bringen des Kochmediums.

15. Friteuse nach Anspruch 14, **dadurch gekennzeichnet, dass** die Mittel zum wieder in Umlauf bringen des Kochmediums einen Speicher (17), der aus dem Auslass (15) für das Kochmedium gespeist werden kann, und eine Pumpe (18), die eine Leitung (19) zum Rückführen des Kochmediums in den Topf speist, umfassen.

16. Friteuse nach Anspruch 15, **dadurch gekennzeichnet, dass** diese Rückführleitung (19) einen hohlen Stab zum Rückführen des Kochmediums an den hinteren Teil des Topfes umfasst.

17. Friteuse nach einem der Ansprüche 14 bis 16, **dadurch gekennzeichnet, dass** die Mittel zum wieder in Umlauf bringen einen Filter (21) umfassen.

18. Friteuse nach Anspruch 17, **dadurch gekennzeichnet, dass** der Filter (21) in eine Filterpumpe eingebaut ist.

19. Friteuse nach Anspruch 17 oder Anspruch 18, **dadurch gekennzeichnet, dass** die Mittel zum wieder in Umlauf bringen einen zwischen dem Auslass für das Kochmedium und einem Speicher (17) eingebauten Filter umfassen.

20. Friteuse nach Anspruch 19, **dadurch gekennzeichnet, dass** der Auslass (15) für das Kochmedium und der Filter (21) an der Vorderseite der Vorrichtung angeordnet sind.

21. Friteuse nach einem der vorangehenden Ansprüche, umfassend Steuerungsmittel, die einen Ein-/Ausschalter (42) und einen von einem Bediener regelbaren Temperaturwahlschalter aufweisen.

22. Friteuse nach Anspruch 21, **dadurch gekennzeichnet, dass** ein thermostatischer Regler zum Regeln der Temperatur des Kochmediums vorgesehen ist.

23. Friteuse nach Anspruch 21 oder Anspruch 22, umfassend Mittel zum Regeln der Gaszündmittel.

24. Friteuse nach einem der Ansprüche 21 bis 23, umfassend Mittel zum Überwachen der Verbrennungsbedingungen.

25. Friteuse nach einem der Ansprüche 21 bis 24, umfassend Mittel zum Regeln der Zufuhr von Gas und Luft an den Brenner und zum Abstellen der Zufuhr von brennbarem Gas bei Fehlen geeigneter Verbrennungsbedingungen.

26. Friteuse nach einem der Ansprüche 21 bis 25, umfassend Anzeigemittel, die mit geeigneten Warngeräten zum Melden von einem oder mehreren der folgenden Umstände verbunden sind:
wenn das Kochmedium eine voreingestellte Temperatur erreicht hat;
mögliche Überhitzung des Kochmediums;
mögliche Fehlfunktion oder fehlerhafte Verbindung eines Thermostats im System;
möglicher Zündungsfehler;
mögliches Versagen des Kochmediums, sich mit einer vorgesehenen Geschwindigkeit zu erwärmen.

27. Friteuse nach einem der Ansprüche 21 bis 26, umfassend eines oder mehrere der folgenden Mittel:
Mittel zum Eingeben von Zeit- und Temperaturparameter;
Mittel zum Anzeigen der Parameter;
Mittel zum Geben einer hörbaren und/oder sichtbaren Meldung des Ablaufs einer eingestellten Kochdauer;
Mittel zum Speichern eingegebener Parameter für mehrmalige Verwendung.

28. Friteuse nach einem der Ansprüche 21 bis 27, umfassend Speichermittel, die angepasst sind, geeignete Parameter zum Kochen besonderer Nahrungsmittel zu speichern, und eine Steuerung "auf einen Tastendruck", die bedienbar ist, um die Friteuse in Übereinstimmung mit diesen Parameter einzuschalten und zu betreiben.

29. Friteuse nach einem der vorangehenden Ansprüche, umfassend eine Korbhebevorrichtung (32, 33).

30. Friteuse nach Anspruch 29, **dadurch gekennzeichnet, dass** die Korbhebevorrichtung (32, 33) steuerbar ist, um den Korb (30) unter Steuerung eines Bedieners in das Kochmedium zu senken oder wenn das Kochmedium eine gewünschte Temperatur erreicht hat, und den Korb bei Ablauf einer voreingestellten Kochdauer automatisch zu heben.

31. Friteuse nach einem der Ansprüche 21 bis 30, umfassend Mittel zum Überwachen des Grades der Temperaturänderung im Kochmedium während des Kochens einer Lebensmittelcharge und zum automatischen Anpassen der Kochparameter für bestimmte Nahrungsmittel in Reaktion hierauf.

## Revendications

1. Friteuse (1) comprenant un bac de cuisson (2) et un brûleur (3) constituant une source de chaleur destinée à chauffer un milieu de cuisson à l'intérieur du bac (2), dans laquelle un tel bac (2) comporte une base pratiquement plate (4) qui est localisée sur ledit brûleur (3) et **caractérisée en ce que** le bac (2) est muni d'une enveloppe pour gaz brûlés (5) conçue pour recevoir des produits de combustion gazeux provenant du brûleur (3), et **caractérisée en ce que** le brûleur (3) comprend une chambre de distribution de gaz (9) surmontée par une plaque de combustion de surface (10) au-dessous d'une chambre de combustion (11) dont la surface supérieure est la base (4) du bac de cuisson (2), ou bien est en contact thermique avec celui-ci.

2. Friteuse selon la revendication 1, dans laquelle l'enveloppe pour gaz brûlés (5) est soudée au bac de cuisson (2).

3. Friteuse selon la revendication 1 ou la revendication 2, dans laquelle l'enveloppe pour gaz brûlés (5) s'élève sur le ou les côté(s) du bac (2) jusqu'à un niveau de remplissage désigné pour le milieu de cuisson.

4. Friteuse selon l'une quelconque des revendications précédentes, dans laquelle le bac de cuisson (2) est rectangulaire et l'enveloppe pour gaz brûlés (5) s'étend de façon externe autour des trois côtés de ce bac de cuisson (2) en vue d'une communication symétrique avec les gaz brûlés de sortie au niveau de l'arrière du dispositif.

5. Friteuse selon l'une quelconque des revendications précédentes, dans laquelle le brûleur (3) est un brûleur à gaz.

6. Friteuse selon la revendication 5, dans laquelle la chambre de combustion (11) est soudée au bac de cuisson (2).

7. Friteuse selon l'une quelconque des revendications précédentes, dans laquelle une alimentation en gaz destinée au brûleur (3) comprend un moyen destiné à fournir au brûleur du gaz et de l'air prémélangés.

8. Friteuse selon la revendication 5, 6 ou 7, dans laquelle des électrodes à étincelle dépassent dans la chambre de combustion en vue d'allumer un tel mélange gaz/air.

9. Friteuse selon l'une quelconque des revendications précédentes, dans laquelle le bac de cuisson (2) est installé et mis en oeuvre dans une position telle que sa base soit inclinée à l'horizontale.

10. Friteuse selon la revendication 9, dans laquelle la base (4) du bac de cuisson (2) est inclinée vers le bas vers l'avant.

11. Friteuse selon l'une quelconque des revendications précédentes, dans laquelle une partie inférieure du bac de cuisson (2) est munie de nervures externes.

12. Friteuse selon l'une quelconque des revendications précédentes, dans laquelle la base (4) du bac de cuisson (2) est munie d'un orifice de sortie (15) pour le milieu de cuisson.

13. Friteuse selon la revendication 12, dans laquelle un tel orifice de sortie de milieu de cuisson (15) est muni d'une vanne de commande.

14. Friteuse selon la revendication 12 ou la revendication 13, et comprenant un moyen destiné à la remise en circulation du milieu de cuisson.

15. Friteuse selon la revendication 14, dans laquelle un tel moyen de remise en circulation du milieu de cuisson comprend un réservoir (17) pouvant être alimenté à partir dudit orifice de sortie de milieu de cuisson (15) et une pompe (18) alimentant une conduite (19) destinée à faire retourner le milieu de cuisson vers le bac.

16. Friteuse selon la revendication 15, dans laquelle une telle conduite de retour (19) comprend un bâton creux destiné à faire retourner le milieu de cuisson vers le bac au niveau de sa partie arrière.

17. Friteuse selon l'une quelconque des revendications 14 à 16, dans laquelle le moyen de remise en circulation comprend un filtre (21).

18. Friteuse selon la revendication 17, dans laquelle un tel filtre (21) est incorporé dans une pompe de filtration.

19. Friteuse selon la revendication 17 ou 18, dans laquelle le moyen de remise en circulation comprend un filtre incorporé entre l'orifice de sortie de milieu de cuisson et un réservoir (17).

20. Friteuse selon la revendication 19, dans laquelle cet orifice de sortie de milieu de cuisson (15) et ce filtre (21) sont localisés à l'avant de l'appareil.

21. Friteuse selon l'une quelconque des revendications, laquelle comprend un moyen de commande comprenant un interrupteur général (42) et un commutateur sélecteur de température pouvant être commandé par un opérateur.

22. Friteuse selon la revendication 21, dans laquelle une régulation thermostatique est prévue pour commander la température du milieu de cuisson.

23. Friteuse selon la revendication 21 ou la revendication 22, et comprenant un moyen destiné à commander le moyen d'allumage de gaz.

24. Friteuse selon l'une quelconque des revendications 21 à 23, et comprenant un moyen destiné à surveiller les conditions de combustion.

25. Friteuse selon l'une quelconque des revendications 21 à 24, et comprenant un moyen destiné à commander l'alimentation en gaz et en air du brûleur et destinée à couper l'alimentation en gaz combustible en l'absence des conditions de combustion appropriées.

26. Friteuse selon l'une quelconque des revendications 21 à 25, et comprenant un moyen d'affichage connecté à des écrans de surveillance appropriés destinés à indiquer un ou plusieurs éléments quelconques parmi les éléments suivants :
l'instant où le milieu de cuisson a atteint une température préétablie,
une surchauffe éventuelle du milieu de cuisson,
une défaillance ou une mauvaise connexion éventuelles de tout thermostat dans le système,
une défaillance d'allumage éventuelle,
le fait de ne pas réussir à ce que le milieu de cuisson se réchauffe à une vitesse prédite.

27. Friteuse selon l'une quelconque des revendications 21 à 26, et comprenant un moyen ou plusieurs moyens quelconques parmi :
un moyen destiné à fournir en entrée des paramètres de temps et de température,
un moyen destiné à afficher de tels paramètres,
un moyen destiné à donner une indication audible et/ou visuelle de l'expiration du temps de cuisson quelconque établi,
un moyen destiné à enregistrer les paramètres appliqués en entrée en vue d'une utilisation répétée.

28. Friteuse selon l'une quelconque des revendications 21 à 27, et comprenant un moyen de mémoire conçu pour retenir des paramètres appropriés pour la cuisson d'une denrée alimentaire particulière et une commande "à un seul appui" pouvant être mise en oeuvre pour actionner et mettre en oeuvre la friteuse conformément à ces paramètres.

29. Friteuse selon l'une quelconque des revendications précédentes, et comprenant un moyen d'ascenseur à panier (32, 33).

30. Friteuse selon la revendication 29, dans laquelle un tel moyen d'ascenseur à panier (32, 33) peut être commandé de manière à faire descendre le panier (30) dans le milieu de cuisson sous la commande d'un opérateur ou lorsque le milieu de cuisson atteint une température désirée, et pour relever automatiquement le panier lors de l'expiration du temps de cuisson préétabli.

31. Friteuse selon l'une quelconque des revendications 21 à 30, et comprenant un moyen destiné à surveiller la vitesse de variation de température dans le milieu de cuisson au cours de la cuisson d'une charge alimentaire et destiné à ajuster automatiquement les paramètres de cuisson pour une denrée alimentaire particulière en réponse à celle-ci.
